# DEMANDE DE BREVET EUROPEEN

(11) **EP 2 918 485 A1**
(43) Date de publication de la demande: **16.09.2015**
(21) Numéro de dépôt: 15151819.8
(22) Date de dépôt: 20.01.2015
(51) Int. Cl.: B62D 65/16, B60R 19/02, B60R 13/02, B60R 13/04

(54) **Procédé de montage d'un ensemble de garnissage externe de véhicule automobile**

(30) Priorité: 10.03.2014 FR 1451966
(71) Demandeur: Faurecia Bloc Avant, 92000 Nanterre (FR)
(72) Inventeur: Midol, Vincent, 25600 Nommay (FR)
(74) Mandataire: Blot, Philippe Robert Emile

(57) **Abrégé**

Procédé de montage d'un ensemble de garnissage (13) extérieur de véhicule (10) sur une structure (15) de véhicule, l'ensemble de garnissage comprenant :
- au moins une peau (16) de pare-chocs ;
- au moins un élément d'aspect (18) rigide, définissant une ouverture interne (20) ;
- au moins un élément de garnissage interne (22) destiné à être positionné dans l'ouverture interne (20) de l'élément d'aspect (18) ;

le procédé de montage comprenant :
- une étape (a) de fixation de l'élément de garnissage interne (22) sur l'élément d'aspect (18),
- une étape (b) de fixation de la peau (16) sur l'élément d'aspect (18), et
- une étape (c) de montage de l'ensemble constitué de la peau (16), de l'élément d'aspect (18) et de l'élément de garnissage interne (22) sur la structure (15),

caractérisé en ce que, lors des étapes (a) et (b), la fixation de l'élément de garnissage interne (22) et de la peau (16) sur l'élément d'aspect (18) se fait par accostage respectivement de l'élément de garnissage interne (22) sur l'élément d'aspect (18), et par accostage de la peau (16) sur l'élément d'aspect (18).

## Description

La présente invention concerne un procédé de montage d'un ensemble de garnissage extérieur de véhicule sur une structure de véhicule, l'ensemble de garnissage comprenant :
- au moins une peau de pare-chocs ;
- au moins un élément d'aspect rigide, définissant une ouverture interne ;
- au moins un élément de garnissage interne destiné à être positionné dans l'ouverture interne de l'élément d'aspect ;
   le procédé de montage comprenant :
- une étape (a) de fixation de l'élément de garnissage interne sur l'élément d'aspect,
- une étape (b) de fixation de la peau sur l'élément d'aspect, et
- une étape (c) de montage de l'ensemble constitué de la peau, de l'élément d'aspect et de l'élément de garnissage interne sur la structure,

L'invention s'applique par exemple au montage de la face avant d'un véhicule automobile, destinée par exemple à abriter et à protéger le bloc moteur du véhicule.

La face avant d'un véhicule automobile est constituée de plusieurs pièces présentant chacune une forme spécifique pour s'adapter à la partie du véhicule qu'elles recouvrent, telles que la peau de pare-chocs, la grille d'entrée d'air, ou l'élément d'enjoliveur. Afin de conférer une esthétique particulière à la face avant du véhicule, il convient de s'assurer que la transition entre les différentes pièces de la face avant du véhicule se fait avec un jeu minimal entre les pièces. On parle de gestion des affleurements entre les pièces.

L'affleurement entre la peau et la grille d'entrée d'air du véhicule est géré de façon connue par isostatisme. Cependant, du fait des dispersions lors de la réalisation des différentes pièces, par exemple dues à l'injection et au refroidissement de ces pièces, et de la rigidité de ces pièces, il est difficile d'obtenir une face avant sensiblement continue avec des zones de transition ne présentant aucun espace entre les pièces, ce qui dégrade l'aspect du véhicule.

Ainsi, il est connu de procéder à un montage de ces différentes pièces entre elles, avant de monter l'ensemble sur la structure du véhicule en appuyant les bords des pièces adjacentes les uns contre les autres et en limitant l'espace entre ceux-ci. Il est aussi connu d'ajouter à l'ensemble déjà assemblé un élément d'aspect, ou enjoliveur, afin de masquer les éléments de la structure du véhicule automobile s'étendant derrière les pièces qui doivent être montées sur la structure, et afin de combler l'espace entre les pièces, une fois qu'elles seront montées, et de combler ainsi les jeux éventuels entre les différentes pièces.

Ce procédé ne donne cependant pas entière satisfaction. En effet, le montage de l'ensemble constitué de la peau, de la grille d'entrée d'air et de l'enjoliveur sur la structure du véhicule doit permettre également un ajustement intime et une zone de transition entre les différentes pièces continue. Or un tel ajustement est rendu très difficile du fait de la rigidité importante de l'enjoliveur, qui est par exemple réalisé sous la forme d'un jonc rigide destiné à s'étendre autour de la grille d'entrée d'air et à assurer la transition entre cette grille et les ailes du véhicule. Il n'est ainsi parfois pas possible de réaliser la fixation de certaines pièces entre elles correctement sans démonter puis remonter d'autres pièces, afin que toutes les pièces soient bien ajustées entre elles.

La présente invention a pour but de remédier à cet inconvénient en proposant un montage d'un ensemble de garnissage extérieur d'un véhicule simple à mettre en oeuvre et garantissant un positionnement en affleurement entre les différentes pièces qui ont été montées.

À cet effet, l'invention a pour objet un procédé du type précité, dans lequel, lors des étapes (a) et (b), la fixation de l'élément de garnissage interne et de la peau sur l'élément d'aspect se fait par accostage respectivement de l'élément de garnissage interne sur l'élément d'aspect, et par accostage de la peau sur l'élément d'aspect, et dans lequel au moins les bords latéraux de la peau sont souples.

Un tel procédé de montage permet ainsi d'assurer un meilleur montage de l'ensemble de garnissage extérieur, en limitant les difficultés d'accostage des différents éléments entre eux. En effet, en positionnant les autres éléments plus souples en les accostant contre l'élément d'aspect rigide, il est possible d'obtenir un ensemble de garnissage extérieur présentant une surface externe sensiblement ininterrompue dans les zones de transition entre les différents éléments de cet ensemble, puisque la souplesse de la peau et de l'élément de garnissage interne leur permet de se positionner en affleurement contre l'élément d'aspect rigide. Ainsi la position d'éléments relativement souples s'adapte à la position d'un élément rigide et non l'inverse comme cela était prévu dans l'art antérieur.

Le procédé de montage selon l'invention peut comporter une ou plusieurs des caractéristiques suivantes :
- l'élément d'aspect est un jonc annulaire fermé sur lui-même,
- l'élément de garnissage interne est une grille d'entrée d'air,
- l'ensemble de garnissage comprend en outre au moins un élément d'enjoliveur positionné en dehors de l'ouverture interne, le procédé comprenant une étape supplémentaire de montage de l'élément d'enjoliveur sur l'élément d'aspect,
- l'accostage de l'élément de garnissage interne sur l'élément d'aspect se fait en mettant les bords de l'élément de garnissage interne en appui contre le bord interne de l'élément d'aspect,
- l'accostage de la peau sur l'élément d'aspect se fait en mettant au moins un bord de la peau en appui contre le bord externe de l'élément d'aspect,
- au moins les bords latéraux de la peau sont souples, et
- l'étape (a) est effectuée avant l'étape (b), ou l'étape (b) est effectuée avant l'étape (a).

L'invention sera mieux comprise à la lecture de la description qui va suivre, donnée uniquement à titre d'exemple et faite en se référant aux dessins annexés, sur lesquels :
- la figure 1 est une vue de côté d'une partie d'un véhicule automobile comprenant un ensemble de garnissage selon l'invention ;
- la figure 2 est une vue de face, depuis l'extérieur du véhicule, de l'ensemble de garnissage extérieur selon l'invention, et
- la figure 3 est une vue en perspective, depuis l'avant vers l'arrière du véhicule, de l'élément d'aspect 18.

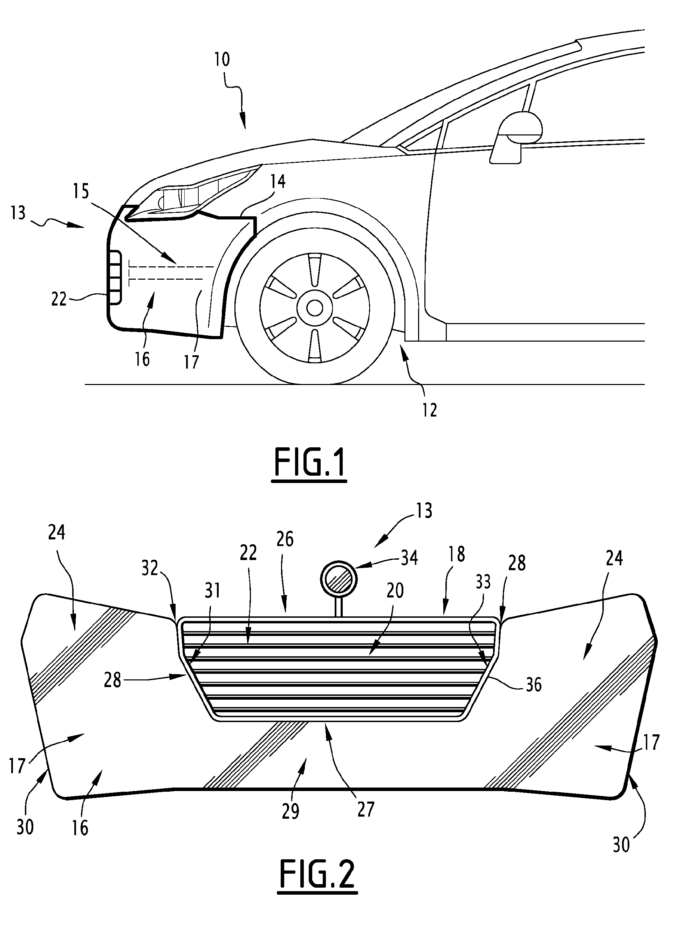

Dans la description, le terme « latéral » est entendu comme désignant des éléments s'étendant de part et d'autre d'un axe vertical situé sensiblement au centre de la figure 2.

En référence à la figure 1, on décrit un véhicule 10 automobile comprenant au moins une pièce de support et une pièce de carrosserie destinée à être appliquée contre la pièce de support. En particulier, l'invention s'applique à un véhicule 10 comportant au moins une aile avant 12, formant la pièce de support, et un ensemble de garnissage 13, formant la pièce de carrosserie, destiné à être appliqué contre l'aile avant 12 dans une zone de transition 14. De façon classique, le véhicule 10 comporte deux ailes avant 12, et l'ensemble de garnissage 13 présente deux parties latérales 17, chaque partie latérale étant destinée à être appliqué contre l'une des ailes avant 12, de part et d'autre de l'ensemble de garnissage 13. Sur la figure 1, une seule aile avant 12 et une seule partie latérale 17 de l'ensemble de garnissage 13 sont représentées.

L'ensemble de garnissage 13, ainsi que les ailes 12, sont montés sur la caisse du véhicule 10 afin de recouvrir la partie avant du véhicule 10. La caisse du véhicule 10 forme donc une structure 15 sur laquelle est monté l'ensemble de garnissage.

L'ensemble de garnissage 13 est intégré dans un véhicule 10 et forme une partie de la surface extérieure de ce véhicule, c'est-à-dire que la surface extérieure et le contour de l'ensemble de garnissage sont visibles depuis l'extérieur du véhicule. Il est donc nécessaire de s'assurer d'un aspect satisfaisant de l'ensemble de garnissage et de son environnement. Selon l'exemple de réalisation représenté sur la figure 1, l'ensemble de garnissage 13 est intégré à l'avant du véhicule 10, mais il est entendu que l'ensemble de garnissage 13 pourrait s'étendre à l'arrière du véhicule 10. Dans la suite de la description, l'ensemble de garnissage 13 sera décrit dans le cadre d'une face avant de véhicule.

L'ensemble de garnissage 13 comprend au moins une peau 16 de pare-chocs, au moins un élément d'aspect 18 rigide définissant une ouverture interne 20, et au moins un élément de garnissage interne 22 s'étendant dans l'ouverture interne 20. La peau 16, l'élément d'aspect 18 et l'élément de garnissage interne 22 sont fixés ensemble sur la structure 15 du véhicule 10.

Comme représenté sur la figure 2, la peau 16 comprend des zones latérales 24, formant les parties latérales 17 de l'ensemble de garnissage 13 et délimitant une ouverture centrale 26, les zones latérales 24 s'étendant de part et d'autre de l'ouverture centrale 26.

L'ouverture centrale 26 comprend au moins deux bords latéraux 28, définis par les bords intérieurs des zones latérales 24 de la peau 16. L'ouverture centrale 26 comprend en outre au moins un bord inférieur 27 formé par le bord supérieur d'une zone transversale inférieure 29 de la peau 16 qui relie les zones latérales 24 entre elles. L'ouverture centrale 26 comprend en outre un bord supérieur (non représenté) qui peut être formé par le bord inférieur d'une zone transversale supérieure (non représentée) de la peau 16, s'étendant sensiblement parallèlement à la zone transversale inférieure 29 et reliant également les zones latérales 24 entre elles. Alternativement, le bord supérieur de l'ouverture centrale 26 pourrait être formé par un autre élément de face avant du véhicule s'étendant au-dessus de la peau 16.

Chaque zone latérale 24 comprend en outre un bord extérieur 30 formant les bords extérieurs de l'ensemble de garnissage 13. Chacun de ces bords extérieurs est destiné à s'étendre en appui contre l'une des ailes 12 du véhicule dans les zones de transition 14.

La peau 16 est souple au moins au niveau des zones latérales 24, ce qui permet à la peau 16 de se déformer de façon élastique au moins dans ces zones latérales 24. Le reste de la peau 16 peut également présenter une certaine souplesse tout en ayant une rigidité suffisante pour répondre aux contraintes mécaniques auxquelles doit satisfaire une peau de pare-chocs. Notamment, la peau 16 est également souple au niveau des bords latéraux 28, afin de faciliter le montage de la peau 16 sur l'élément d'aspect 18, comme cela sera précisé par la suite.

L'élément d'aspect 18 est logé latéralement dans l'ouverture centrale 26 de la peau 16, au moins contre les bords latéraux 28 et le bord inférieur 27 de la peau 16, et contre le bord inférieur d'une zone transversale supérieure (non représentée), le cas échéant. L'élément d'aspect 18 comprend un bord interne 31, contre lequel est appuyé l'élément de garnissage interne 22, ainsi qu'un bord externe 32, contre lequel est appuyée la peau 16.

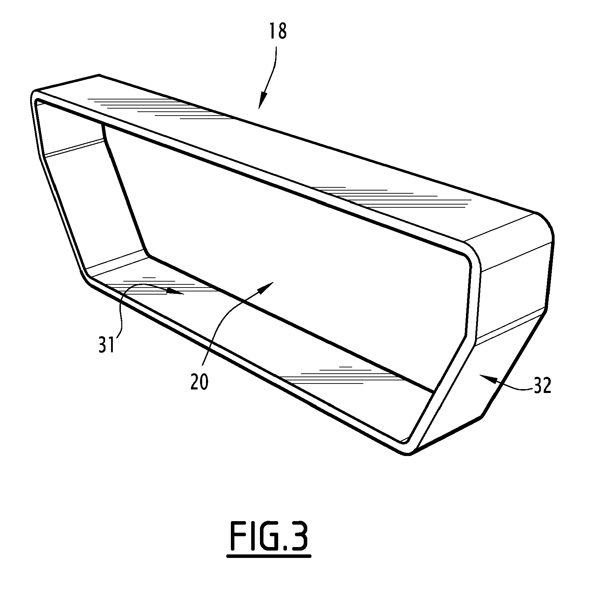

Comme représenté sur la figure 3, le bord interne 31 et le bord externe 32 sont définis respectivement par les surfaces interne et externe de l'élément d'aspect 18, la surface interne et la surface externe étant comprises entre les faces avant et arrière du véhicule 10.

L'élément d'aspect 18 est avantageusement un jonc annulaire rigide définissant lui-même une ouverture interne contenue dans l'ouverture centrale 26.

L'élément d'aspect 18 est réalisé en un matériau rigide, par exemple du métal ou un matériau plastique rigide, tel que l'ABS.

L'élément de garnissage interne 22 s'étend dans l'ouverture interne 20 et comprend au moins un bord périphérique 33, formant le contour externe de l'élément de garnissage interne 22, destiné à être en appui contre le bord interne 31 de l'élément d'aspect 18.

L'élément de garnissage interne 22 est par exemple une grille d'entrée d'air. La grille d'entrée d'air est par exemple réalisée en matière plastique et son bord périphérique 33 présente une souplesse relative permettant d'adapter la forme de la grille à celle de l'élément d'aspect 18, comme cela sera décrit ultérieurement. La grille d'entrée d'air remplit complètement l'ouverture interne 20, c'est-à-dire qu'elle s'étend contre le bord interne 31 de l'élément d'aspect 18.

L'ensemble de garnissage 13 comprend également un élément d'enjoliveur 34, par exemple positionné en dehors de l'ouverture interne 20. L'élément d'enjoliveur 34 représente par exemple le logo de la marque du véhicule 10, et est destiné à être visible depuis l'extérieur du véhicule 10. L'élément d'enjoliveur 34 est ainsi par exemple situé au-dessus de l'élément d'aspect 18, en contact avec un bord supérieur de l'élément d'aspect 18, et s'étend selon un axe de symétrie vertical de l'ensemble de garnissage 13 du véhicule 10.

Le procédé de montage de l'ensemble de garnissage 13 selon l'invention va maintenant être décrit.

Au cours d'une première étape (a) du procédé, on fixe l'élément de garnissage interne 22 sur l'élément d'aspect 18.

Lors de cette étape, le positionnement de l'élément de garnissage interne 22 est réalisé par accostage de l'élément de garnissage 22 sur l'élément d'aspect 18. C'est-à-dire qu'au cours de cette étape, les bords périphériques 33 de l'élément de garnissage interne 22 sont mis en appui contre les bords internes 31 de l'élément d'aspect 18, de sorte à obtenir des zones de transition continues entre l'élément d'aspect 18 et l'élément de garnissage interne 22. Notamment, on met en appui la surface définissant le bord interne 31 contre le bord périphérique 33 de l'élément de garnissage 22. Cette mise en appui est rendue possible par la souplesse des bords périphériques 33 de l'élément de garnissage interne 22.

Au cours d'une deuxième étape (b) du procédé, de manière symétrique à la première étape, on fixe la peau 16 sur l'élément d'aspect 18. Lors de cette étape, le positionnement de la peau 16 est réalisé par accostage de la peau 16 sur l'élément d'aspect 18. C'est-à-dire qu'au cours de cette étape, les bords latéraux 28 et le bord inférieur 27 de la peau 16 sont mis en appui contre le bord externe 32 de l'élément d'aspect 18, de sorte à obtenir une surface de transition continue 36 entre l'élément d'aspect 18 et la peau 16, comme représenté sur la figure 2. Notamment, on met en appui la surface définissant le bord externe 32 contre les bords latéraux 28 et le bord inférieur 27 de la peau 16. Cette mise en appui est rendue possible par la souplesse de la peau 16, au moins au niveau de ses bords latéraux 28.

En variante, les étapes (a) et (b) du procédé peuvent être effectuées dans un sens inverse, ou bien simultanément.

Au cours d'une troisième étape (c) du procédé, une fois que l'accostage entre, d'une part, l'élément de garnissage interne 22 et l'élément d'aspect 18 et, d'autre part, entre la peau 16 et l'élément d'aspect 18 a été effectué, l'ensemble de garnissage 13 comprenant la peau 16, l'élément d'aspect 18 et l'élément de garnissage interne 22, ces éléments étant fixés les uns aux autres, est fixé sur la structure 15 du véhicule 10.

En effectuant le montage de la peau 16 et de l'élément de garnissage interne 22 par rapport à l'élément d'aspect 18 rigide, et non l'inverse, on rend possible l'accostage de la peau 16 et de l'élément de garnissage interne 22 sur l'élément d'aspect 18, et l'obtention de zones de transition continues sans jeu entre les différents éléments de l'ensemble de garnissage 13. Ainsi, le procédé de montage selon l'invention comprend une étape de positionnement de la peau 16 et de l'élément de garnissage interne 22 par rapport à l'élément d'aspect 18 rigide, et une étape de fixation de l'ensemble comprenant la peau 16 et l'élément de garnissage interne 22 sur la structure 15 du véhicule.

Dans une variante, l'ensemble de garnissage 13 comprend en outre un élément d'enjoliveur 34, et le procédé comprend une étape supplémentaire (b') de fixation de l'élément d'enjoliveur 34 sur l'élément d'aspect 18 par accostage, l'étape (b') étant effectuée à n'importe quel moment avant l'étape (c) du procédé.

## Revendications

1. Procédé de montage d'un ensemble de garnissage (13) extérieur de véhicule (10) sur une structure (15) de véhicule, l'ensemble de garnissage comprenant :
- au moins une peau (16) de pare-chocs ;
- au moins un élément d'aspect (18) rigide, définissant une ouverture interne (20) ;
- au moins un élément de garnissage interne (22) destiné à être positionné dans l'ouverture interne (20) de l'élément d'aspect (18) ;
le procédé de montage comprenant :
- une étape (a) de fixation de l'élément de garnissage interne (22) sur l'élément d'aspect (18),
- une étape (b) de fixation de la peau (16) sur l'élément d'aspect (18), et
- une étape (c) de montage de l'ensemble constitué de la peau (16), de l'élément d'aspect (18) et de l'élément de garnissage interne (22) sur la structure (15),
**caractérisé en ce que**, lors des étapes (a) et (b), la fixation de l'élément de garnissage interne (22) et de la peau (16) sur l'élément d'aspect (18) se fait par accostage respectivement de l'élément de garnissage interne (22) sur l'élément d'aspect (18), et par accostage de la peau (16) sur l'élément d'aspect (18), et **en ce que** au moins les bords latéraux (28) de la peau (16) sont souples.

2. Procédé de montage selon la revendication 1, **caractérisé en ce que** l'élément d'aspect (18) est un jonc annulaire fermé sur lui-même.

3. Procédé de montage selon la revendication 1 ou 2, **caractérisé en ce que** l'élément de garnissage interne (22) est une grille d'entrée d'air.

4. Procédé de montage selon l'une quelconque des revendications 1 à 3, **caractérisé en ce que** l'ensemble de garnissage (13) comprend en outre au moins un élément d'enjoliveur (34) positionné en dehors de l'ouverture interne (20), le procédé comprenant une étape supplémentaire de montage de l'élément d'enjoliveur (34) sur l'élément d'aspect (18).

5. Procédé de montage selon l'une quelconque des revendications 1 à 4, **caractérisé en ce que** l'accostage de l'élément de garnissage interne (22) sur l'élément d'aspect (18) se fait en mettant les bords de l'élément de garnissage interne (22) en appui contre le bord interne (31) de l'élément d'aspect (18).

6. Procédé de montage selon l'une quelconque des revendications 1 à 5, **caractérisé en ce que** l'accostage de la peau (16) sur l'élément d'aspect (18) se fait en mettant au moins un bord de la peau (16) en appui contre le bord externe (32) de l'élément d'aspect (18).

7. Procédé de montage selon l'une quelconques des revendications 1 à 6, **caractérisé en ce que** l'étape (a) est effectuée avant l'étape (b), ou que l'étape (b) est effectuée avant l'étape (a).
